# NEUE EUROPÄISCHE PATENTSCHRIFT

(11) **EP 3 212 858 B2**
(45) Veröffentlichungstag und Bekanntmachung des Hinweises auf die Entscheidung über den Einspruch: **26.03.2025**
(45) Hinweis auf die Patenterteilung: 15.01.2020
(21) Anmeldenummer: 15767416.9
(22) Anmeldetag: 23.09.2015
(51) Int. Cl.: E04F 15/00, E04B 5/00, F16B 9/02, F24D 3/14, F16L 3/00, A44B 18/00, F16B 1/00, E04F 15/18, F16B 5/12

(54) **FLÄCHENTEMPERIERUNGSSYSTEM**
UNDERFLOOR HEATING SYSTEM
SYSTÈME DE CHAUFFAGE AU SOL

(30) Priorität: 28.10.2014 DE 202014105163 U
(43) Veröffentlichungstag der Anmeldung: 06.09.2017
(73) Patentinhaber: REHAU Industries SE & Co. KG, 95111 Rehau (DE)
(72) Erfinder: BECK, Thomas, 90513 Zirndorf (DE); BURKHARDT, Oliver, 91080 Uttenreuth (DE); VOHLER, Tobias, 92318 Neumarkt (DE)
(86) Internationale Anmeldenummer: PCT/EP2015/001884
(87) Internationale Veröffentlichungsnummer: WO 2016/066240

(56) Entgegenhaltungen:
- EP-A1- 2 767 765
- DE-U1- 202010 009 133
- DE-U1- 202010 009 431
- DE-U1- 202010 011 520

## Beschreibung

Die vorliegende Erfindung betrifft ein Flächentemperierungssystem, das mindestens ein flexibles Kunststoffrohr, dessen Außenseite zumindest teilweise von einem ersten Element einer Klettverbindung ummantelt ist; eine Trägerfolie , wobei an einer Seite der Trägerfolie ein zweites Element der Klettverbindung angeordnet ist, so dass das/die flexible(n) Kunststoffrohr(e) lösbar unter Bildung der Klettverbindung an der Trägerfolie festlegbar sind; und einen formstabilen, flächigen Träger umfasst, auf dessen einer Seite die Trägerfolie angeordnet ist.

Flächentemperierungssysteme und darin einsetzbare flexible Kunststoffrohre sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden, Wänden oder Decken eingegossen sind. Vor dem Vergießen mit Estrich sind die Rohrleitungen üblicherweise durch geeignete Schienen oder Halter auf Trägern gehaltert. Zur einfacheren und schnelleren Verlegung ist es bekannt, die Rohrleitungen mittels einer Klettverbindung auf den Trägern festzulegen. Solche Klettverlegesysteme für Flächentemperierungsysteme sind beispielsweise aus der DE 20 2010 009 133 U1, der DE 20 2010 009 431 U1 und der DE 20 2010 011 520 U1 bekannt. Nachteilig an dem in der DE 20 2010 009 133 U1 beschriebenen Flächentemperierungssystem wird gesehen, dass es zwischen dem starren formstabilen flächigen Träger und dem Rohr nur zu einem punktuellen Kontakt im Randbereich des Rohres und damit nur zu einer schwach ausgebildeten Klettverbindung kommt, was zu Montageungenauigkeit oder Montageproblemen aufgrund nur mangelhaft fixierter Rohre führen kann.

Um dies zu vermeiden, wird in der DE 20 2010 009 133 U1 selbst vorgeschlagen, zwischen dem starren formstabilen flächigen Träger und der gewebeverstärkten Folie eine elastische Beschichtung vorzusehen, durch die Auflagefläche des Rohres auf der gewebeverstärkten Folie vergrößert und dadurch die Klettverbindung verstärkt werden soll. Ein derartiger komplexer Aufbau der Trägereinheit für das Rohr ist jedoch kostenintensiv.

Alternativ dazu schlägt die DE 20 2014 101 286 U1 vor, den formstabilen flächigen Träger als eine Tiefziehfolie auszubilden, die parallele, in einem Abstand zueinander verlaufende Rippen aufweist, die die zumindest teilweise Aufnahme des Rohres ermöglichen. Nachteilig an dem in der die DE 20 2014 101 286 U1 beschriebenen Flächentemperierungssystem wird gesehen, dass dieses unflexibel hinsichtlich der Verlegerichtung des Rohres ist, da die Rohre nur in den Rippen verlegt werden können. In den Umlenkbereichen muss das Rohr zwangsläufig außerhalb der Rippen verlaufen, so dass es insbesondere in diesen Bereich zu einer nicht hinreichenden Fixierung des Rohres kommen kann, was zu einem Aufschwimmen des Rohres führen kann.

Die Verwendung von Kunststoff-Hohlkammerplatten als Träger in Flächentemperierungssystemen ist aus der EP 2 767 765 A1 bekannt.

An dieser Stelle setzt die vorliegende Erfindung ein, deren Aufgabe darin liegt, ein Flächentemperierungssystem zur Verfügung zu stellen, die die Nachteile des Stands der Technik überwinden. Insbesondere soll das erfindungsgemäße Flächentemperierungssystem eine sichere Verbindung zwischen Rohr und Rohrträger gewährleisten und eine geringe Aufbauhöhe ermöglichen, so dass das Flächentemperierungssystem für den Einsatz bei Altbausanierungen besonders geeignet ist.

Diese und andere Aufgaben werden durch ein Flächentemperierungssystem mit den Merkmalen des Anspruchs 1 gelöst. Bevorzugte Ausführungsformen der Erfindung sind in den davon abhängigen Ansprüchen beschrieben.

Gemäß der vorliegenden Erfindung wurde erkannt, dass eine ausreichend starke Klettverbindung zwischen einem flexiblen Kunststoffrohr und einer Trägerfolie dann gewährleistet ist, wenn der formstabilen, flächigen Träger als Hohlkammerplatte aus einem Kunststoffmaterial ausgebildet ist. Hohlkammerplatte aus einem Kunststoffmaterial, wie vorzugsweise Polyethylen (PE), Polypropylen (PP) und/oder Polyvinylchlorid (PVC), weist eine ausreichende Elastizität auf, um beim Verlegen des flexiblen Kunststoffrohrs auf der mit der Trägerfolie versehenen Kunststoff-Hohlkammerplatte bei Einwirkung eines äußeren Drucks (beispielsweise wenn der Handwerker mit einem Fuß auf die entsprechende Stelle tritt oder mit der Hand darauf drückt oder darüber streicht) auf die Hohlkammerplatte entsprechend nachzugeben. Dadurch wird die Kontaktfläche zwischen dem flexiblen Kunststoffrohr und der Trägerfolie vergrößert, was zu einer stärker ausgebildeten Klettverbindung führt. Weiter ist eine derartige Hohlkammerplatte starr genug, um auch bei einer geringen Höhe von vorzugsweise etwa 2,0 mm bis 4,0 mm eben auf einem Untergrund auslegbar zu sein. Dies ermöglicht eine geringe Aufbauhöhe des erfindungsgemäßen Flächentemperierungssystems, das sich daher insbesondere für die Verwendung bei Altbausanierungen, bei denen häufig oberhalb des bereits vorhandenen Estrichs wenig Raum zur Verlegung einer neuen Fußbodenheizung bleibt, in besonderer Weise eignet. Darüber hinaus kann das flexible Kunststoffrohr beliebig auf dem mit der Trägerfolie versehenen formstabilen flächigen Träger ohne festgelegte Verlegerichtung verlegt werden. Zur Korrektur der Verlegung kann die Klettverbindung gelöst und das Rohr in der gewünschten Anordnung verlegt werden. Dies erlaubt so eine flexible Rohrverlegung, die sich an unterschiedliche Raumgeometrien anpassen lässt. Ein Aufschwimmen des erfindungsgemäßen flexiblen Kunststoffrohrs im frisch verlegten Estrich ist weitestgehend ausgeschlossen.

Dementsprechend liegt die vorliegende Erfindung in der Bereitstellung eines Flächentemperierungssystems, das mindestens ein flexibles Kunststoffrohr, dessen Außenseite zumindest teilweise von einem ersten Element einer Klettverbindung ummantelt ist; eine Trägerfolie , wobei an einer Seite der Trägerfolie ein zweites Element der Klettverbindung angeordnet ist, so dass das/die flexible(n) Kunststoffrohr(e) lösbar unter Bildung der Klettverbindung an der Trägerfolie festlegbar sind; und einen formstabilen, flächigen Träger umfasst, auf dessen einer Seite die Trägerfolie angeordnet ist, wobei der formstabile, flächige Träger als Hohlkammerplatte aus einem Kunststoffmaterial ausgebildet ist, wobei die die Hohlkammern der Hohlkammerplatte umgebenden Stege eine Wandstärke im Bereich von 0,50 mm bis 2,0 mm und die die Hohlkammern der Hohlkammerplatte umgebenden Stege eine Wandstärke im Bereich von 0,50 mm bis 2,0 mm aufweisen.

Wie er hierin verwendet wird, bedeutet der Begriff "Kunststoffrohr" ein Vollkunststoffrohr oder ein Metall-Kunststoff-Verbundrohr. In Bezug auf das erfindungsgemäßen Kunststoffrohr wird der Begriff "flexibel" hierin so verwendet, dass das erfindungsgemäße flexible Kunststoffrohr Biegeradien ermöglicht, die zur Verlegung eines Rohres für ein Flächentemperierungssystem erforderlich sind.

Bevorzugt handelt es sich bei dem Kunststoffmaterial des flexiblen Kunststoffrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahl-vernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Die Vernetzung zum vernetzten Polyethylen erfolgt vorzugsweise wie in der DE 102 51 152 B4 beschrieben. Darüber hinaus kann das polymere Material weiter einen Haftvermittler (vorzugsweise ein funktionalisiertes Polyolefinen, insbesondere ein Maleinsäureanhydrid-gepfropftes LLDPE (lineares Polyethylen geringerer Dichte)) und/oder eine Diffusionssperrschicht, insbesondere aus Polyvinylakohol (PVA) oder Ethylen-Vinylalkohol-Copolymer (EVOH) umfassen.

Hinsichtlich des flexiblen Kunststoffrohrs des erfindungsgemäßen Flächentemperierungssystems ist es überdies bevorzugt, dass das flexible Kunststoffrohr zwischen einer ersten Schicht aus polymerem Material, die ein Lumen des Kunststoffrohres umgibt, und dem ersten Element der Klettverbindung eine flexible, elastische Ummantelung umfasst. Beim Verlegen des flexiblen Kunststoffrohrs auf dem mit der Trägerfolie versehenen formstabilen flächigen Träger passt sich die flexible, elastische Ummantelung aufgrund ihrer Elastitzität an die Oberfläche der Trägerfolie an, wenn auf das flexible Kunststoffrohr von außen Druck ausgeübt wird, beispielsweise indem der Verleger mit dem Fuß auf das erfindungsgemäße flexible Kunststoffrohr steigt oder mit der Hand darauf drückt oder darüber streicht. Dadurch wird die Kontaktfläche zwischen dem flexiblen Kunststoffrohr und der Trägerfolie vergrößert, was zu einer stärker ausgebildeten Klettverbindung führt. Nach Wegfall des Drucks auf das flexible Kunststoffrohr bleibt diese Kontaktfläche aufgrund der Klettverbindung im Wesentlichen unverändert. Darüber hinaus kann das flexible Kunststoffrohr beliebig auf dem mit der Trägerfolie versehenen formstabilen flächigen Träger ohne festgelegte Verlegerichtung verlegt werden. Zur Korrektur der Verlegung kann die Klettverbindung gelöst und das Rohr in der gewünschten Anordnung verlegt werden. Dies erlaubt so eine flexible Rohrverlegung, die sich an unterschiedliche Raumgeometrien anpassen lässt. Ein Aufschwimmen des erfindungsgemäßen flexiblen Kunststoffrohrs im frisch verlegten Estrich ist weitestgehend ausgeschlossen.

Darüber hinaus kann es sich als günstig erweisen, wenn das erste Element der Klettverbindung spiralförmig oder doppelspiralförmig an der Außenseite des flexiblen Kunststoffrohrs angeordnet ist. Bei geringem Materialaufwand sorgt dies für eine dennoch hohe Häufigkeit der Kontaktstellen zwischen dem flexiblen Kunststoffrohr und dem Trägerfolie. Dabei hat es sich als materialeinsparend und damit kostengünstig erwiesen, wenn die flexible, elastische Ummantelung die erste Schicht aus polymerem Material teilweise ummantelt. Eine besonders effektive Variante hinsichtlich Materialaufwand für die flexible elastische Schicht und hoher Kontaktfläche zwischen dem flexiblen Kunststoffrohr und der Trägerfolie liegt in diesem Zusammenhang insbesondere dann vor, wenn die flexible, elastische Ummantelung an der der ersten Schicht zugewandten Seite des ersten Elements der Klettverbindung angeordnet ist und dem Verlauf des ersten Elements der Klettverbindung an der Außenseite des flexiblen Kunststoffrohrs folgt. Die flexible, elastische Ummantelung kann die erste Schicht des flexiblen Kunststoffrohrs auch vollständig ummantelt. Dazu kann die flexible, elastische Ummantelung im Rahmen einer Coextrusion unmittelbar oder unter Einsatz einer Haftvermittlerschicht auf die erste Schicht aufgebracht werden. Eine bevorzugte einfache Verbindung zwischen der flexiblen, elastischen Ummantelung sowie der ersten Schicht und/oder dem ersten Element der Klettverbindung erfolgt über eine Klebstoffschicht. Die flexible, elastische Ummantelung kann aus einem flexiblen Material, wie einem geschäumten Kunststoff (z.B. ein geschäumtes Polyethylen oder Polyurethan) hergestellt sein. Die flexible, elastische Ummantelung gibt dann bei Einwirkung eines äußeren Drucks aufgrund ihrer Flexibilität nach und ermöglicht auf diese Weise beim Aufdrücken des Kunststoffrohres auf die Trägerfolie die Ausbildung einer vergrößerten Auflagefläche und somit einer stärkeren Klettverbindung zwischen erfindungsgemäßem Kunststoffrohr und Trägerfolie.

Hinsichtlich des erfindungsgemäßen Flächentemperierungssystems ist es bevorzugt, wenn das Kunststoffmaterial der Hohlkammerplatte aus der Gruppe, bestehend aus Polyethylen (PE), Polypropylen (PP) und Polyvinylchlorid (PVC), ausgewählt ist. Bei diesen Materialien ist eine ausgezeichnete Balance zwischen den an sich gegenläufigen Eigenschaften der ausreichenden Starrheit und der vorhandenen Elastizität gewährleistet. Dies führt zu einer großen Oberfläche der Hohlkammerplatte zur Ausbildung der Klettverbindung beim Verlegen des flexiblen Kunststoffrohres auf der Hohlkammerplatte, wobei gleichzeitig eine geringe Aufbauhöhe des erfindungsgemäßen Flächentemperierungssystems erzielt werden kann.

Erfindungsgemäß weisen die Hohlkammern der Hohlkammerplatte eine lichte Weite im Bereich von 1,5 mm bis 4,5 mm, vorzugsweise im Bereich von 2,0 mm bis 4,0 mm und besonders bevorzugt im Bereich von 2,5 mm bis 3,5 mm, auf. Liegt die lichte Weite der Hohlkammern der Hohlkammerplatte in diesem Bereich werden bei geringerer Aufbauhöhe des erfindungsgemäßen Flächentemperierungssystems bereits isolierende Eigenschaften durch die Hohlkammerplatte erzielt. Dennoch bleibt die Hohlkammerplatte ausreichend starr.

Erfindungsgemäß weisen die die Hohlkammern der Hohlkammerplatte umgebenden Stege eine Wandstärke im Bereich von 0,50 mm bis 2,0 mm, vorzugsweise im Bereich von 1,0 mm bis 1,5 mm auf. Derartige Wandstärken der Stege gewährleisten eine hohe Stabilität des formstabilen, flächigen Trägers.

Ebenso kann es von Nutzen sein, wenn der formstabilen, flächigen Träger faltbar und/oder zusammenrollbar ausgebildet ist. Dies ermöglicht einen einfachen Transport des Trägers des erfindungsgemäßen Flächentemperierungssystems an den Einsatzort.

Darüber hinaus kann es von Nutzen sein, wenn der formstabile, flächige Träger an seiner der Trägerfolie abgewandten Seite mit einer Abdeckfolie verbunden ist, die bevorzugt wasserabweisend ausgeführt sein kann. Dadurch kann effektiv verhindert werden, dass Leckagewasser oder Feuchtigkeit in den Boden des Raums gelangt. Die Abdeckfolie ist an dem formstabilen flächigen Träger vorzugsweise mittels eines Klebstoffes oder in anderer Weise verbunden bevorzugt unlösbar befestigt. Hierzu ist es bevorzugt, wenn die Abdeckfolie als Verbundfolie ausgebildet ist, deren dem formstabilen, flächigen Trägern zugewandte Seite als Metallschicht, vorzugsweise als Aluminiumschicht ausgebildet ist. Durch einen derartigen Aufbau lassen sich die isolierenden Eigenschaften des formstabilen, flächigen Trägers weiter erhöhen. Dabei ist es besonders hilfreich, wenn die Abdeckfolie neben der Metallschicht eine Trägerschicht, vorzugsweise aus Papier, und eine Schutzschicht, vorzugsweise aus Polymermaterial, insbesondere Polyethylen, umfasst.

Ebenso kann es hilfreich sein, wenn die Trägerfolie als Verbundfolie ausgebildet ist, deren dem formstabilen, flächigen Trägern zugewandte Seite als Metallschicht, vorzugsweise als Aluminiumschicht ausgebildet ist. Dabei ist es besonders bevorzugt, dass die Trägerfolie neben der Metallschicht eine Trägerschicht, vorzugsweise aus Papier, und eine Schutzschicht, vorzugsweise aus Polymermaterial, insbesondere Polyethylen, umfasst.

Die Trägerfolie ist bevorzugt flächig mit dem zweiten Element der Klettverbindung versehen, vorzugsweise ist die gesamte Fläche der Trägerfolie mit dem zweiten Element der Klettverbindung versehen. Die so gebildete flächige Klettverbindung ermöglicht eine Rohrverlegung auf der gesamten Fläche der Trägerfolie in einem nahezu beliebigen Verlegemuster.

Gemäß einer Ausführungsform der vorliegenden Erfindung wird ein Element der Klettverbindung durch Haken, Schlingen und/oder Fasern gebildet, die in ein Gewirke, ein Vlies, ein Veloursgewebe oder dergleichen des anderen Elements der Klettverbindung lösbar eingreifen können. Die Klettverbindung gewährleistet so eine lösbare Verbindung zwischen der Trägerfolie und dem flexiblen Kunststoffrohr, wodurch das flexible Kunststoffrohr auf der Trägerfolie reversibel festgelegt wird. Dabei ist es bevorzugt, wenn das erste Element der Klettverbindung die Haken, Schlingen und/oder Fasern aufweist, während das zweite Element der Klettverbindung durch das Gewirke, das Vlies, das Veloursgewebe oder ein Plüsch-, Frottee- oder sonstiges textiles Flächengebilde gebildet wird. Umgekehrt ist auch möglich, dass das erste Element der Klettverbindung durch das Gewirke, das Vlies, das Veloursgewebe, das Plüsch-, Frottee- oder sonstiges textiles Flächengebilde gebildet wird, während das zweite Element der Klettverbindung die Haken, Schlingen und/oder Fasern aufweist.

Gemäß der vorliegenden Erfindung ist der formstabile flächige Träger vorzugsweise so stabil ausgeführt, dass er für die Verlegung des flexiblen Kunststoffrohrs als Bestandteil einer Fußbodenheizung geeignet ist.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1 eine perspektivische Ansicht auf einen Abschnitt eines Flächentemperierungssystems gemäß einer Ausführungsform der vorliegenden Erfindung; und
Fig. 2 eine Querschnittsdarstellung eines formstabilen, flächigen Trägers des in Fig. 1 gezeigten erfindungsgemäßen Flächentemperierungssystems während des Entfaltens.

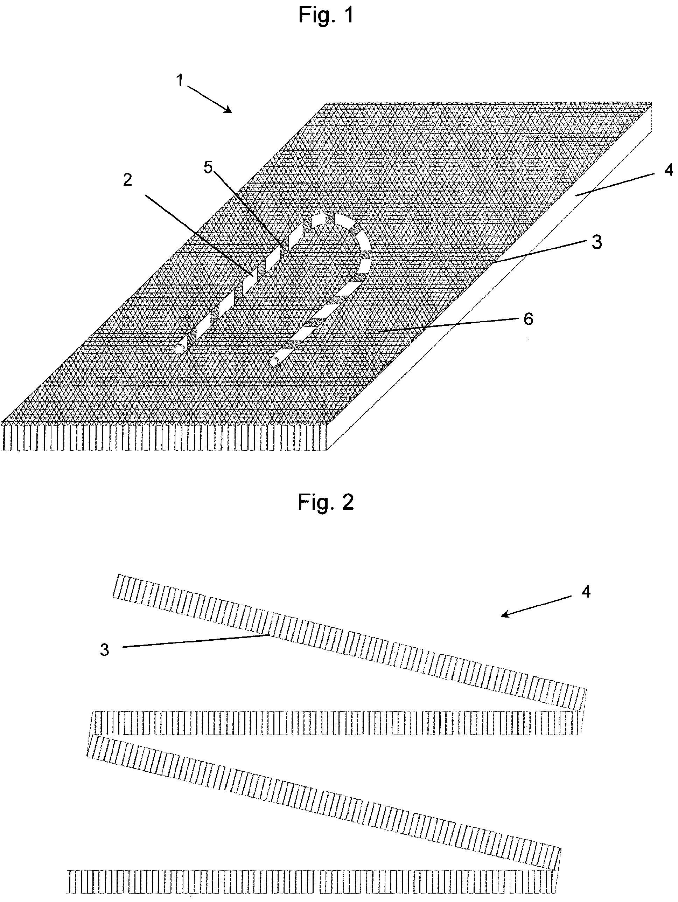

In Fig. 1 ist ein Abschnitt einer Ausführungsform eines Flächentemperierungssystems 1 gemäß der vorliegenden Erfindung in einer perspektivischen Ansicht gezeigt. Das erfindungsgemäße Flächentemperierungssystem 1 umfasst ein flexibles Kunststoffrohr 2, eine Trägerfolie 3 sowie einen formstabilen, flächigen Träger 4.

Die Außenseite des flexiblen Kunststoffrohrs 2 ist in Form einer Spirale von einem ersten Element 5 einer Klettverbindung gebildet. Das flexible Kunststoffrohr 2 umfasst eine erste Schicht aus polymerem Material, die ein Lumen zur Führung eines Wärmeträgermediums umgibt. In der in Fig.1 dargestellten Ausführungsform ist die erste Schicht aus Peroxidvernetztem Polyethylen (PE-Xa), um das herum in der angegeben Reihenfolge eine Haftvermittlerschicht und eine Diffusionssperrschicht angeordnet sind. Bevorzugt ist die erste Schicht sauerstoffdicht gemäß DIN 4726. Die erste Schicht wird vorzugsweise durch Coextrusion hergestellt. Die Außenseite des flexiblen Kunststoffrohres 2 bildet das erste Element 5 der Klettverbindung, das als Band ausgebildet ist, das in Form einer Spirale um die erste Schicht angeordnet sind. Damit ist die erste Schicht von dem ersten Element 5 der Klettverbindung teilweise ummantelt. Das erste Element 5 der Klettverbindung umfasst Haken, Fasern oder ähnliches. Um die erste Schicht des flexiblen Kunststoffrohres 2 herum kann über die gesamte Fläche mittels einer Haftvermittlerschicht und/oder einer Klebstoffverbindung eine weitere Schicht aus geschäumtem Polyethylen befestigt, die eine flexible elastische Ummantelung bildet. Die flexible elastische Ummantelung kann wiederum über eine Klebstoffverbindung mit dem ersten Element 5 der Klettverbindung verbunden sein.

Das flexible Kunststoffrohr 2 ist in dem erfindungsgemäßen Flächentemperierungssystem 1 auf die Trägerfolie 3 aufgebracht, die flächig auf den formstabilen flächigen Träger 4 aufgebracht ist. An ihrer dem flexiblen Kunststoffrohr 2 zugewandten Seite umfasst die Trägerfolie 3 ein zweites Element 6 der Klettverbindung, das als Gewirke ausgebildet ist, alternativ auch als Vlies, Veloursgewebe, Plüsch-, Frottee- oder sonstiges textiles Flächengebilde ausgebildet sein kann. Das flexible Kunststoffrohr 2, an dessen Außenseite sich das erste Element 5 der Klettverbindung befindet, ist über das zweite Element 6 lösbar unter Bildung der Klettverbindung 7 an der Trägerfolie 3 festgelegt.

An der dem flexiblen Kunststoffrohr 2 abgewandten Seite des zweiten Elements 6 umfasst die Trägerfolie 3 einen vorzugsweise als Polyethylenfolie ausgebildeten Träger, der über eine Klebstoffschicht mit einer vorzugsweise ebenfalls als Polyethylenfolie ausgebildeten Schutzschicht verbunden ist. An der Unterseite der Schutzschicht befindet sich ein Papierträger, auf den eine Aluminiumfolie folgt.

An der dem flexiblen Kunststoffrohr 2 abgewandten Seite der Trägerfolie 3 ist der formstabilen, flächigen Träger 4 angeordnet. Bei dem formstabilen, flächigen Träger 4 handelt es sich erfindungsgemäß um eine Hohlkammerplatte 4 aus einem Kunststoffmaterial, die in der in **Fig. 1** dargestellten Ausführungsform aus Polyethylen (PE), insbesondere Polyethylen hoher Dichte (HDPE) hergestellt ist. Alternativ können auch Polypropylen (PP), insbesondere statistisches Polypropylen (PP-R), oder Polyvinylchlorid (PVC), insbesondere Hart-PVC (PVC-U) zum Einsatz kommen. Die Dicke der Hohlkammerplatte 4 beträgt vorzugsweise 2,0 mm bis 4,0 mm, wobei die Dicke der Hohlkammerplatte 4 in der in **Fig. 1** dargestellten Ausführungsform etwa 3,0 mm beträgt. Die lichte Weite der Hohlkammern der Hohlkammerplatte 4 liegt erfindungsgemäß in einem Bereich von 1,5 mm bis 4,5 mm, wobei die Hohlkammern der Hohlkammerplatte 4 in der in **Fig. 1** dargestellten Ausführungsform eine lichte Weite von etwa 2,0 mm aufweisen. Die Stege, die die Hohlkammern der Hohlkammerplatte 4 umgeben, weisen erfindungsgemäß eine Wandstärke auf, die im Bereich von 0,50 mm bis 2,0 mm liegt, wobei die Stege der Hohlkammerplatte 4 in der in **Fig. 1** dargestellten Ausführungsform eine Wandstärke von etwa 0,60 mm aufweisen. Die Gesamtbreite der Hohlkammerplatte 4 beträgt vorzugsweise 0,50 m bis 2,0 m, wobei die Hohlkammerplatte 4 in der in **Fig. 1** dargestellten Ausführungsform etwa 1,0 m breit ist. Die Hohlkammern der Hohlkammerplatte 4 sind dabei quer zur Längsrichtung der Platte 4 ausgerichtet.

Die Hohlkammerplatte 4 des erfindungsgemäßen Flächentemperierungssystems 1 ist vorzugsweise faltbar und/oder aufrollbar ausgebildet. Hierzu können die Stege einiger Hohlkammern der Hohlkammerplatte 4 an der der Trägerfolie 3 gegenüberliegenden Seite der Hohlkammerplatte 4 nicht vorhanden oder durchtrennt sein, wobei sich eine Durchtrennung vorzugsweise über die gesamte Breite der Hohlkammerplatte 4 erstreckt. Eine derartiges Fehlen oder eine derartige Durchtrennung der Stege kann in Längsrichtung der Hohlkammerplatte 4 gesehen in gleichen Abständen oder mit unterschiedlichen Abständen erfolgen. Eine solche faltbare Hohlkammerplatte 4 ist in Fig. 2 während des Entfaltens in einer schematischen Querschnittsdarstellung gezeigt.

Auf die der Trägerfolie 3 abgewandten Seite des formstabilen, flächigen Trägers 4 kann eine Abdeckfolie aufgebracht auf die Hohlkammerplatte 4 aufgebracht sein, die bevorzugt aus einer vorzugsweise als einer Aluminiumfolie ausgebildeten Metallschicht, einem Papierträger und einer vorzugsweise als Polyethylenfolie ausgebildeten Schutzschicht aufgebaut ist, durch den die Abdeckfolie wasserabweisend ausgeführt ist. Dadurch kann effektiv verhindert werden, dass Leckagewasser oder Feuchtigkeit in den Boden des Raums gelangt.

Bei seiner Verlegung wird das flexible Kunststoffrohr 2 auf die Trägerfolie 3 aufgelegt, so dass das flexible Kunststoffrohr 2 zunächst nur im Scheitelbereich punktuell auf der Trägerfolie 3 aufliegt. Wird nun auf das flexible Kunststoffrohr 2 von oben ein Druck ausgeübt, gibt die Hohlkammerplatte 4an den mit Druck beaufschlagten Stellen nach und bietet dem flexiblen Kunststoffrohr 2 dadurch eine vergrößerte Oberfläche zur Ausbildung der Klettverbindung. Damit liegt das erste Element 5 der Klettverbindung nun eher flächig auf dem zweiten Element 6 auf der Trägerfolie 3 auf, so dass aufgrund der vergrößerten Auflagefläche eine stärkere Klettverbindung ausgebildet wird.

Zum Verlegen eines als Fußbodenheizung ausgebildeten erfindungsgemäßen Flächentemperierungselements 1 wird der mit der Trägerfolie 3 und ggf. der Abdeckfolie 5 versehene formstabile, flächige Träger 4 zunächst auf dem Boden vollflächig ggf. nach vorherigem Zuschneiden ausgelegt. Daraufhin wird das flexible Kunststoffrohr 2 im gewünschten Muster auf der Trägerfolie 3 verlegt und angedrückt, so dass eine Klettverbindung mit vergrö-βerter Auflagefläche ausgebildet wird. Zur Korrektur des Verlegemusters kann die reversibel ausgebildete Klettverbindung durch Anheben des flexiblen Kunststoffrohrs 2 vom formstabilen, flächigen Träger 4 gelöst werden, wonach dieses erneut verlegt werden kann. Abschließend wird die Anordnung mit Estrich vergossen.

Die vorliegende Erfindung wurde unter Bezugnahme auf die in den Figuren gezeigte Ausführungsform der vorliegenden Erfindung im Detail beschrieben. Es versteht sich, dass die vorliegende Erfindung nicht auf die gezeigte Ausführungsform beschränkt ist, sondern sich der Umfang der vorliegenden Erfindung aus den beiliegenden Ansprüchen ergibt.

## Patentansprüche

1. Flächentemperierungssystem (1), umfassend:
- mindestens ein flexibles Kunststoffrohr (2), dessen Außenseite zumindest teilweise von einem ersten Element (5) einer Klettverbindung ummantelt ist;
- eine Trägerfolie (3), wobei an einer Seite der Trägerfolie (3) ein zweites Element (6) der Klettverbindung angeordnet ist, so dass das/die flexible(n) Kunststoffrohr(e) (2) lösbar unter Bildung der Klettverbindung an der Trägerfolie (3) festlegbar sind; und
- einen formstabilen, flächigen Träger (4), auf dessen einer Seite die Trägerfolie (3) angeordnet ist;
**dadurch gekennzeichnet, dass**
der formstabilen, flächigen Träger (4) als Hohlkammerplatte aus einem Kunststoffmaterial ausgebildet ist, wobei Hohlkammern der Hohlkammerplatte (4) eine lichte Weite im Bereich von 1,5 mm bis 4,5 mm aufweisen und die die Hohlkammern der Hohlkammerplatte (4) umgebenden Stege eine Wandstärke im Bereich von 0,50 mm bis 2,0 mm aufweisen.

2. Flächentemperierungssystem (1) nach Anspruch 1, **dadurch gekennzeichnet, dass** das Kunststoffmaterial der Hohlkammerplatte (4) ausgewählt ist aus der Gruppe, bestehend aus Polyethylen (PE), Polypropylen (PP) und Polyvinylchlorid (PVC).

3. Flächentemperierungssystem (1) nach Anspruch 1 oder Anspruch 2, **dadurch gekennzeichnet, dass** der formstabilen, flächigen Träger (4) faltbar und/oder aufrollbar ausgebildet ist.

4. Flächentemperierungssystem (1) nach einem der vorhergehenden Ansprüche, **dadurch gekennzeichnet, dass** die der Trägerfolie (3) abgewandte Seite des formstabilen, flächigen Trägers (4) mit einer Abdeckfolie verbunden ist.

5. Flächentemperierungssystem (1) nach Anspruch 4, **dadurch gekennzeichnet, dass** die Abdeckfolie als Verbundfolie ausgebildet ist, deren dem formstabilen, flächigen Trägern (4) zugewandte Seite als Metallschicht, vorzugsweise als Aluminiumschicht ausgebildet ist.

6. Flächentemperierungssystem (1) nach Anspruch 4 oder Anspruch 5, **dadurch gekennzeichnet, dass** die Abdeckfolie neben der Metallschicht eine Trägerschicht, vorzugsweise aus Papier, und eine Schutzschicht, vorzugsweise aus Polymermaterial, insbesondere Polyethylen, umfasst.

7. Flächentemperierungssystem (1) nach einem der vorhergehenden Ansprüche, **dadurch gekennzeichnet, dass** die Trägerfolie (3) als Verbundfolie ausgebildet ist, deren dem formstabilen, flächigen Trägern (4) zugewandte Seite als Metallschicht, vorzugsweise als Aluminiumschicht ausgebildet ist.

8. Flächentemperierungssystem (1) nach Anspruch 7, **dadurch gekennzeichnet, dass** die Trägerfolie (3) neben der Metallschicht eine Trägerschicht, vorzugsweise aus Papier, und eine Schutzschicht, vorzugsweise aus Polymermaterial, insbesondere Polyethylen, umfasst.

9. Flächentemperierungssystem (1) nach einem der vorhergehenden Ansprüche, **dadurch gekennzeichnet, dass** das erste Element (5) der Klettverbindung spiralförmig oder doppelspiralförmig an der Außenseite des flexiblen Kunststoffrohrs (1) angeordnet ist.

## Claims

1. A surface temperature control system (1), comprising:
- at least one flexible plastic pipe (2), the outside of which is at least partly covered by a first element (5) of a hook-and-loop connection;
- a support sheet (3), wherein a second element (6) of the hook-and-loop connection is arranged on a side of the support sheet (3) such that the flexible plastic pipe(s) (2) can be releasably fixed to the support sheet (3) to form the hook-and-loop connection; and
- a dimensionally stable, flat support (4), on one side of which the support sheet (3) is arranged;
**characterised in that**
the dimensionally stable, flat support (4) is configured as a multi-wall panel made of a plastics material, wherein cavities of the multi-wall panel (4) have an inside width in the range of from 1.5 mm to 4.5 mm and the webs surrounding the cavities of the multi-wall panel (4) have a wall thickness in the range of from 0.50 mm to 2.0 mm.

2. The surface temperature control system (1) according to claim 1, **characterised in that** the plastics material of the multi-wall panel (4) is selected from the group consisting of polyethylene (PE), polypropylene (PP) and polyvinyl chloride (PVC).

3. The surface temperature control system (1) according to claim 1 or claim 2, **characterised in that** the dimensionally stable, flat support (4) is configured to be capable of being folded and/or rolled.

4. The surface temperature control system (1) according to any one of the preceding claims, **characterised in that** the side of the dimensionally stable, flat support (4) facing away from the support sheet (3) is connected to a covering sheet.

5. The surface temperature control system (1) according to claim 4, **characterised in that** the covering sheet is configured as a composite sheet, the side of which facing towards the dimensionally stable, flat support (4) is configured as a metal layer, preferably as an aluminium layer.

6. The surface temperature control system (1) according to claim 4 or claim 5, **characterised in that**, besides the metal layer, the covering sheet comprises a support layer, preferably made of paper, and a protective layer, preferably made of polymer material, in particular polyethylene.

7. The surface temperature control system (1) according to any one of the preceding claims, **characterised in that** the support sheet (3) is configured as a composite sheet, the side of which facing towards the dimensionally stable, flat support (4) is configured as a metal layer, preferably as an aluminium layer.

8. The surface temperature control system (1) according to claim 7, **characterised in that**, besides the metal layer, the support sheet (3) comprises a support layer, preferably made of paper, and a protective layer, preferably made of polymer material, in particular polyethylene.

9. The surface temperature control system (1) according to any one of the preceding claims, **characterised in that** the first element (5) of the hook-and-loop connection is arranged on the outside of the flexible plastic pipe (1) in a spiral or double spiral manner.

## Revendications

1. Système de thermorégulation de surface (1), comprenant :
- au moins un tube en plastique flexible (2), dont le côté extérieur est au moins partiellement recouvert d'un premier élément (5) d'une liaison auto-agrippante ;
- une feuille de support (3), un deuxième élément (6) de la liaison auto-agrippante étant agencé sur un côté de la feuille de support (3), de telle sorte que le/les tube(s) en plastique flexible(s) (2) peut/peuvent être fixé(s) de manière amovible sur la feuille de support (3) en formant la liaison auto-agrippante ; et
- un support plat indéformable (4), sur un côté duquel est agencée la feuille de support (3) ;
**caractérisé en ce que**
le support plat indéformable (4) est réalisé sous forme de plaque à chambres creuses en une matière plastique, les chambres creuses de la plaque à chambres creuses (4) présentant une largeur intérieure dans la plage de 1,5 mm à 4,5 mm et les nervures entourant les chambres creuses de la plaque à chambres creuses (4) présentant une épaisseur de paroi dans la plage de 0,50 mm à 2,0 mm.

2. Système de thermorégulation de surface (1) selon la revendication 1, **caractérisé en ce que** la matière plastique de la plaque à chambres creuses (4) est choisie dans le groupe constitué par le polyéthylène (PE), le polypropylène (PP) et le chlorure de polyvinyle (PVC).

3. Système de thermorégulation de surface (1) selon la revendication 1 ou la revendication 2, **caractérisé en ce que** le support plat indéformable (4) est réalisé de manière à pouvoir être plié et/ou enroulé.

4. Système de thermorégulation de surface (1) selon l'une quelconque des revendications précédentes, **caractérisé en ce que** le côté du support plat indéformable (4) détourné de la feuille de support (3) est reliée à une feuille de recouvrement.

5. Système de thermorégulation de surface (1) selon la revendication 4, **caractérisé en ce que** la feuille de recouvrement est réalisée sous forme de feuille composite dont le côté tourné vers le support plat indéformable (4) est réalisé sous forme de couche métallique, de préférence sous forme de couche d'aluminium.

6. Système de thermorégulation de surface (1) selon la revendication 4 ou la revendication 5, **caractérisé en ce que** la feuille de recouvrement comprend, outre la couche métallique, une couche de support, de préférence en papier, et une couche de protection, de préférence en matériau polymère, notamment en polyéthylène.

7. Système de thermorégulation de surface (1) selon l'une quelconque des revendications précédentes, **caractérisé en ce que** la feuille de support (3) est réalisée sous forme de feuille composite dont le côté tourné vers le support plat indéformable (4) est réalisé sous forme de couche métallique, de préférence sous forme de couche d'aluminium.

8. Système de thermorégulation de surface (1) selon la revendication 7, **caractérisé en ce que** la feuille de support (3) comprend, outre la couche métallique, une couche de support, de préférence en papier, et une couche de protection, de préférence en matériau polymère, notamment en polyéthylène.

9. Système de thermorégulation de surface (1) selon l'une quelconque des revendications précédentes, **caractérisé en ce que** le premier élément (5) de la liaison auto-agrippante est agencé en forme de spirale ou en forme de double spirale sur le côté extérieur du tube en plastique flexible (1).
